Europäisches Patentamt

European Patent Office

Office européen des brevets

(19)

(11) **EP 1 145 038 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(21) Anmeldenummer: **99964457.8**

(22) Anmeldetag: **22.12.1999**

(51) Int Cl.⁷: **G01S 13/90**

(86) Internationale Anmeldenummer:
**PCT/DE99/04065**

(87) Internationale Veröffentlichungsnummer:
**WO 00/043807 (27.07.2000 Gazette 2000/30)**

(54) **ANORDNUNG ZUR INTERFEROMETRISCHEN RADARMESSUNG NACH DEM ROSAR-PRINZIP**

ARRANGEMENT FOR THE INTERFEROMETRIC RADAR MEASUREMENT ACCORDING TO THE ROSAR PRINCIPLE

SYSTEME DE MESURE RADAR INTERFEROMETRIQUE SELON LE PRINCIPE DU ROSAR

(84) Benannte Vertragsstaaten:
**AT BE CH CY DE DK ES FI FR GB GR IE IT LI LU MC NL PT SE**

(30) Priorität: **21.01.1999 DE 19902008**

(43) Veröffentlichungstag der Anmeldung:
**17.10.2001 Patentblatt 2001/42**

(73) Patentinhaber: **Astrium GmbH**
**81663 München (DE)**

(72) Erfinder:
• **WOLFRAMM, Aribert, P.**
**D-86899 Landsberg (DE)**
• **KLAUSING, Helmut**
**D-82234 We ling-Hochstadt (DE)**

(74) Vertreter: **Ulrich, Thomas et al**
**EADS Deutschland GmbH,**
**LG-PM - Patente**
**81663 München (DE)**

(56) Entgegenhaltungen:
**EP-A- 0 634 668**     **EP-A- 0 757 259**
**DE-A- 4 304 027**     **DE-A- 4 306 920**
**DE-A- 4 328 573**     **DE-C- 3 922 086**
**DE-C- 4 323 511**

• **GRIFFITHS H: "INTERFEROMETRIC SYNTHETIC APERTURE RADAR" ELECTRONICS AND COMMUNICATION ENGINEERING JOURNAL,GB,INSTITUTION OF ELECTRICAL ENGINEERS, LONDON, Bd. 7, Nr. 6, 1. Dezember 1995 (1995-12-01), Seiten 247-256, XP000545120 ISSN: 0954-0695**

**Beschreibung**

Die Erfindung bezieht sich auf eine Anordnung zur interferometrischen Radarmessung nach dem ROSAR-Prinzip gemäß dem Gattungsbegriff des Anspruchs 1.

Aus DE 39 22 086 ist ein Radarverfahren mit synthetischer Apertur auf der Basis rotierender Antennen (ROSAR) bekannt

Durch die Anmelderin ist aus der DE 199 02 007, die den gleichen Zeitrang besitzt wie die vorliegende Anmeldung, ein Verfahren zur interferometrischen Radarmessung bei einem nach dem ROSAR-Prinzip arbeitenden Hubschrauber-Radar (Heli-Radar) bekannt, bei dem eine quasi-dreidimensionale Radar-Bilddarstellung von Gelände- oder sonstigen Hindernissen ermöglicht wird. Auf diesem Verfahren baut die nachfolgend beschriebene Erfindung auf.

Aus Griffiths H.: "Interferometric synthetic aperture radar", Electronics and Communication Engineering Journal, GB, Institution of Electrical Engineers, London, Bd, 7, Nr. 6 1. Dezember 1995 (1995-12-01), Seiten 247 - 256, XP000545120, ISSN: 0954-0695 ist zwar ein Verfahren zur interferometrischen Radarmessung mit synthetischer Apertur bekannt, jedoch ist hierfür eine Radarplattform erforderlich, die sich auf einer im wesentlichen linearen Bahn bewegt. Eine Möglichkeit für eine solche Radarmessung ohne eine Eigenbewegung der Radarplattform ist dort nicht zu verwirklichen. Auch die entsprechenderi Verarbeitungsalgorithmen dieses Verfahrens sind an die lineare Bewegung anzupassen. Dadurch ist die Antennenbewegung in einem kartesischen Koordinatensystem gegeben. Im Gegensatz hierzu sind jedoch bei ROSAR-Verfahren Verarbeitungsalgorithmen in einem Polarkoordinatensystem entsprechend der Rotationsbewegung der Antennen vorgegeben. Damit sind die Verarbeitungsalgorithmen dieses Standes der Technik nicht auf ROSAR-Systeme übertragbar.

Der vorliegenden Erfindung liegt die Aufgabe zugrunde, auf der Basis dieses interferometrischen Verfahrens Maßnahmen aufzuzeigen, mit denen beispielsweise eine moderne Flughafen-Rollfeldüberwachung oder auf See Schiffen eine Zielaufklärung und Höhenunterschiede auf der Wasseroberfläche, beispielsweise zur Detektion von U-Booten, ermöglicht wird. Ferner soll auch die Überwachung beispielsweise von Hafenanlagen oder des Areals um Befestigungen oder dergleichen möglich sein.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung ist die Erfindung an einem Ausführungsbeispiel erläutert. Die Fig. der Zeichnung ergänzen diese Erläuterungen. Es zeigen:

Fig.1    ein Schemabild eines Ausführungsbeispieles der Anordnung zur interferometrischen Radarmessung, einem zweiten Antennen-Trägerarm (RAg),

Fig. 2    ein Schemabild einer detailliert dargestellten interferometrischen Radarmeßeinrichtung mit nur einem rotierenden Antennen-Trägerarm (RA).

Für ein modernes Rollfeldüberwachungssystem werden bestimmte Systemanforderungen gestellt, die beispielsweise wie folgt zu erfüllen sind:

| | |
|---|---|
| Betriebsfrequenz | 16 GHz |
| Maximale Reichweite | 5500 m |
| Winkelauflösung in Azimut | 0,25° |
| Winkelauflösung in Elevation | 2,0° |
| Entfernungsauflösung | 3 m |
| Antennendrehzahl | 60 U/min. |

Anzuführen ist jedoch, daß das Radar beispielsweise zur Rollfeldüberwachung auch bei anderen Frequenzen, besonders bei noch höheren Frequenzen ab 20 GHz aufwärts betrieben werden kann.

Um nun die vorgegebenen Systemanforderungen mit dem interferometrischen ROSAR-Prinzip zu erfüllen, wird mit folgendem Ansatz gerechnet:

Die mit dem ROSAR-Verfahren erreichbare Winkelauflösung in Azimut $\alpha_{A2}$ errechnet sich nach der DE 43 23 511 C1 aus:

$$\alpha_{Az} = \frac{\lambda}{5 \cdot L \cdot \sin\left(\frac{\gamma}{2}\right)} \qquad (0.1)$$

Mit einem Öffnungswinkel der realen Antenne in Azimut von $\gamma = 45°$ kann die zugehörige Rotorlänge L berechnet werden, bei der die geforderte Winkelauflösung $\alpha_{Az} = 0{,}25°$ erfüllt wird. Der Winkel $\gamma = 45°$ ist nur als Ausführungsbeispiel zu sehen und kann noch mühelos vergrößert werden, falls eine höhere Winkelauflösung gefordert ist. Die zugehörige Rotorlänge L errechnet sich aus:

$$L = \frac{\lambda}{5 \cdot \alpha_{Az} \cdot \sin\left(\frac{\gamma}{2}\right)} \cdot \qquad (0.2)$$

Mit $\lambda = {}^c/_{fs} = 0{,}01875$ in, $\gamma = 45°$ und $\alpha_{Az}$ - 0, 25° folgt die Rotorlänge zu L = 2,2465 m. Diese Rotorlänge L kann problemlos mit 1 U/sec rotieren. Falls ein zweiter Rotorarm (RAg) mit radarmäßig identischer Konfiguration sozusagen als Gegengewicht installiert wird, kann die Drehfrequenz halbiert werden, d.h. die Rotation erfolgt nunmehr mit 0,5 U/sec.

Die Winkelauflösung in Elevation $\varepsilon$ folgt direkt nach dem Prinzip der realen Apertur aus dem Öffnungswinkel der Antenne von $\varepsilon = 2, 0°$. Die Werte $\gamma = 45°$ und $\varepsilon = 2, 0°$ sind als 3 dB-Werte der Antennenrichtcharakteristik zu verstehen, dh. als Halbwertsbreite in Leistung. Mit den Öffnungswinkeln der Antenne in Azimut und Elevation $\gamma = 45°$ und $\varepsilon = 2, 0°$ können mit der aus der Antennentheorie bekannten Faustformel

$$\gamma \approx 70° \cdot \frac{\lambda}{D_{Azimut}} \qquad (0.3)$$

und

$$\varepsilon \approx 70° \cdot \frac{\lambda}{D_{Elevation}} \qquad (0.4)$$

die Antennenmaße abgeschätzt werden, um endgültig eine Aussage hinsichtlich der mechanischen Dimension bzw. Beanspruchung zu machen. Aus den Gleichungen (0.3) und (0.4) folgt:

$$D_{Azimut} = 0{,}029 \text{ m, d.h. ca. 3 cm}$$

und

$$D_{Elevation} = 0{,}656 \text{ m, d.h. ca. 66 cm.}$$

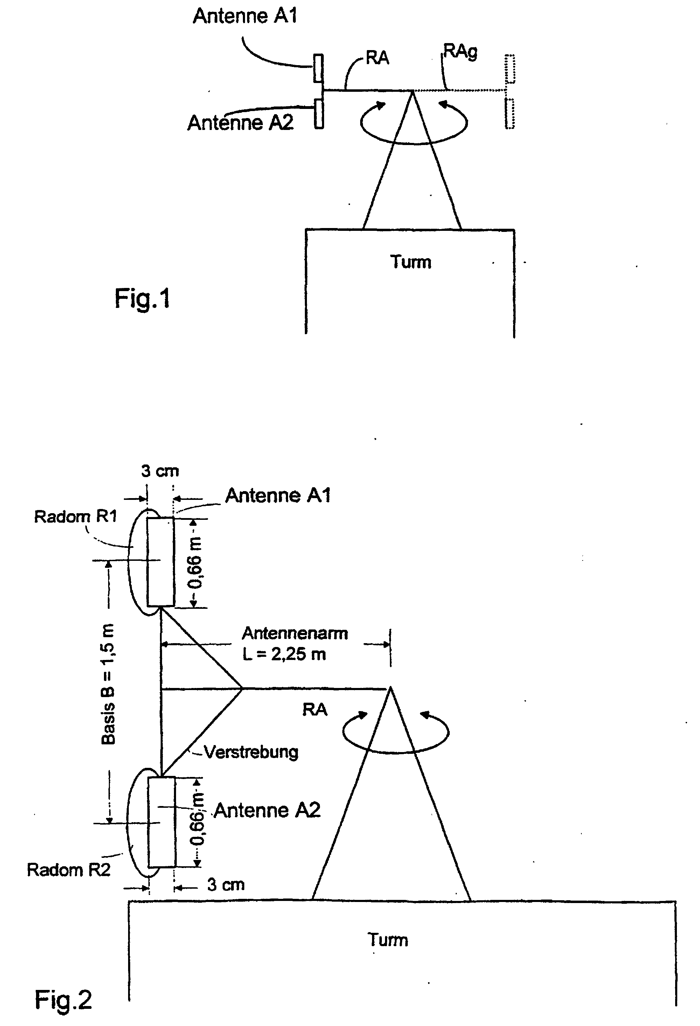

Die Antenne hat also die Maße 3 cm x 66 cm (Azimut x Elevation) und kann mit diesen Proportionen problemlos rotieren. Die Antennen selbst sind laut Figur 1 und Figur 2 noch mit entsprechenden Radomen (R1, R2) geschützt und aerodynamisch durch die Radome günstig beeinflußt.

Die Entfernungsauflösung errechnet sich beim hier verwendeten Impulsradar mit der komprimierten Sendeimpulsdauer $\tau$ und der Lichtgeschwindigkeit c zu:

$$\Delta R = \frac{c \cdot \tau}{2} \qquad (0.5)$$

Die geforderte Entfernungsauflösung ΔR von 3 m wird mit einer komprimierten Sendeimpulsdauer von τ = 20 ns erfüllt.

Um nun beispielsweise den gesamten Rollfeldbereich eines Flughafens erfassen und ausleuchten zu können, wird es in den meisten Fällen erforderlich sein, mehrere Radargeräte bzw. -anlagen auf dem Flughafen zu positionieren. Die räumliche Anordnung ist dabei so zu wählen, daß jeder relevante Flughafenbereich überwacht werden kann. Eine solche Anordnung wird naturgemäß flughafenspezifisch sein, also von Fall zu Fall unterschiedlich. Es versteht sich von selbst, daß die Radarinformationen immer so zu verarbeiten sind, daß ein Gesamtlagebild erhalten wird. Damit sich die einzelnen Radaranlagen nicht gegenseitig beeinflussen, ist vorgesehen, daß die Sendefrequenzen um die jeweiligen Sendebandbreiten nicht überlappend, sondern versetzt gewählt werden.

Die hier vorgeschlagene Anordnung zur interferometrischen Radarmessung bei einer nach dem ROSAR-Prinzip arbeitenden Einrichtung weist eine kohärente Sendeantenne und zwei kohärente Empfangsantennen mit ihren Empfangskanälen auf, die in oder an einer rotierenden Eiruichtung integriert und so positioniert ist, daß jeder relevante Bereich des zu vermessenden bzw. zu überwachenden Areals erfaßbar ist.

Eine weitere Ausführungsform der Erfindung sieht vor, daß ein zweiter Rotorarm (RAg) mit radarmäßig identischer Konfiguration - gewissermaßen als Gegengewicht bzw. unwuchtausgleich - installiert ist. Dies bringt den Vorteil mit sich, daß die Drehfrequenz halbiert werden kann.

Besondere Bedeutung kommt der vorliegenden Anordnung auf Flugplätzen zu, da sie nach einem militärischen Angriff eine optimale Kampfmitteldetektion gewährleisten und die Detektion von offen herumliegender Munition, von Bomben oder sonstigen Sprengkörpern ermöglichen und durch Messung des Höhenprofils der Flugplatzoberfläche nach einem militärischen Angriff die entstandenen Schäden detektieren.

Eine weitere Ausbildung der Erfindung erhöht ihre Einsatz- und Verwendungsmöglichkeiten, nämlich sie mit an sich bekannten Radarverfahren zur Bewegtzielerkennung zu verknüpfen, wodurch alle sich auf dem Flughafengelände bzw. dem zu überwachenden Areal bewegenden Flugzeuge bzw. Land- oder Seefahrzeuge festgestellt werden können.

Für den Fall, daß der Betrieb bei niedrigeren Frequenzen im Bereich von 1 GHz bis ca. 3 GHz erfolgt, ist der Einsatz problemlos auch als Flughafen-Rundsicht-Radar und Mittelbereichs-Rundsicht-Radaranlage möglich.

Die vorgeschlagene Einrichtung ist nicht nur zur Überwachung von Flughäfen und Schiffshäfen einsetzbar, sondern auch zur Überwachung von Verkehrsknotenpunkten und sonstigen wichtigen Abschnitten von Verkehrswegen, seien es Straßen oder Bahnanlagen.

Ferner besteht die Möglichkeit, Richtung und Weg erfaßter Flugzeuge, Schiffe, Autos und sonstiger Objekte zu erfassen. Damit kann deren Weg verfolgt, also eine sogenannte Fahrspur gebildet werden. Damit ist die Disposition des Weges abhängig von der Fahrspur möglich, was für Verkehrsleitsysteme bzw. zur Verkehrsdisposition genutzt werden kann.

Weiterhin kann eine Objektklassifizierung durchgeführt werden, d.h. daß auf einem Flughafen beispielsweise Flugzeuge, Autos, Tankwagen und Follow-Me-Fahrzeuge unterschieden werden können. Das gleiche gilt für die Unterscheidung von Schiffen bzw. von anderen Objekten bei der allgemeinen Objektüberwachung.

**Patentansprüche**

1. Anordnung zur interferometrischen Radarmessung mit einer kohärenten Sendeantenne und zwei kohärenten Empfangsantennen und ihren Empfangskanälen, wobei der Wegunterschied der beiden Antennenabstände zu den gemessenen Auftreff-Punkten aus der Wellenlänge λ des gesendeten Radarsignals und dem gemessenen Phasenunterschied der Empfangsechos der beiden kohärenten Empfangskanäle berechnet werden, **dadurch gekennzeichnet, dass** diese Anordnung als interferometrische ROSAR-Anordnung ausgebildet, in oder an einer notierenden Einrichtung integriert und so positioniert ist, dass jeder relevante Bereich des zu vermessenden Areals erfassbar ist, wobei zur Erlangung eines Gesamtlagebildes mehrere interferometrische ROSAR-Anordnungen in unterschiedlichen Platzpositionierungen angeordnet und miteinander im Netzbetrieb verknüpft sind.

2. Anordnung nach Anspruch 1, **dadurch gekennzeichnet, dass** die rotierende Einrichtung aus wenigstens einer am Ende eines drehbaren Armes befindlichen, aus einer Sende- und zwei Empfangsantennen gebildeten Einheit besteht.

3. Anordnung nach Anspruch 1, **dadurch gekennzeichnet, dass** die rotierende Einrichtung aus einem kreisförmigen Antennenarray mit einer elektronischen Steuerung zum zyklischen Aktivieren von Bereichen des Antennenarrays besteht.

4. Anordnung nach Anspruch 1 oder 2, **dadurch gekennzeichnet, dass** ein zweiter Rotorarm (RAg) mit radarmäßig identischer Konfiguration als Gegengewicht mit dem rotierenden Radararm (RA) verbunden ist.

5. Anordnung nach einem der Ansprüche 1, 2, oder 4, **dadurch gekennzeichnet, dass** die Antennen (A1, A2) durch aerodynamisch günstig geformte Radome (R1, R2) geschützt sind.

6. Anordnung nach einem der vorhergehenden Ansprüche, **dadurch gekennzeichnet, dass** die Sendefrequenzen der einzelnen interferometrischen Radaranlagen um die jeweiligen Sendebandbreiten zueinander versetzt sind.

7. Anordnung nach einem der vorhergehenden Ansprüche, **dadurch gekennzeichnet, dass** die interferometrische Anordnung zur Radarmessung mit einer an sich bekannten Radaranordnung zur Bewegtzielerkennung verknöpft ist

8. Anordnung nach einem der vorhergehenden Ansprüche, **dadurch gekennzeichnet, dass** sie mit einer Auswertevorrichtung zur Erfassung von Richtung und Weg von sich im Überwachungsbereich bewegenden Objekten versehen ist

9. Anordnung nach einem der vorhergehenden Ansprüche, **dadurch gekennzeichnet, dass** sie mit einer Auswertevorrichtung zur Bestimmung von Größe und Art der erfassten Objekte versehen ist.

**Claims**

1. An arrangement for interferometric radar measurement having a coherent transmitting antenna and two coherent receiving antennae and their receiving channels, the path difference of the two antenna spacings from the measured target points being calculated from the wavelength λ of the transmitted radar signal and the measured phase difference between the receiving echoes of the two coherent receiving channels, **characterised in that** this arrangement is constructed as an interferometric ROSAR arrangement, is integrated in or on a rotating device and is positioned such that it is possible to detect each relevant region of the area to be measured, a plurality of interferometric ROSAR arrangements being arranged in different positions and being linked together in a network operation for the purpose of obtaining an image of the overall situation.

2. An arrangement according to Claim 1, **characterised in that** the rotating device comprises at least one unit located at the end of a rotatable arm and formed by a transmitting antenna and two receiving antennae.

3. An arrangement according to Claim 1, **characterised in that** the rotating device comprises a circular antenna array having an electronic control for the cyclic activation of regions of the antenna array.

4. An arrangement according to Claim 1 or 2, **characterised in that** a second rotor arm (RAg) having the same radar configuration is connected to the rotating radar arm (RA) as a counterweight.

5. An arrangement according to one of Claims 1, 2, or 4, **characterised in that** the antennae (A1, A2) are protected by aerodynamically favourably shaped radomes (R1, R2).

6. An arrangement according to one of the preceding claims, **characterised in that** the transmission frequencies of the individual interferometric radar arrangements are mutually offset through the respective transmission band widths.

7. An arrangement according to one of the preceding claims, **characterised in that** the interferometric arrangement for radar measurement is linked to a radar arrangement for moving target recognition, which is known per se.

8. An arrangement according to one of the preceding claims, **characterised in that** it is provided with an evaluation device for detecting the direction and path of objects moving in the surveillance range.

9. An arrangement according to one of the preceding claims, **characterised in that** it is provided with an evaluation device for determining the size and nature of the detected objects.

**Revendications**

1. Agencement pour la mesure radar interférométrique, comprenant une antenne émettrice cohérente et deux antennes réceptrices cohérentes et leurs canaux de réception, dans lequel la différence de trajet des deux écartements des antennes jusqu'aux points d'incidence mesurés est mesurée à partir de la longueur d'onde du signal radar émis et de la différence de phase mesurée de l'écho reçu des deux canaux de réception cohérents, **caractérisé en ce que** cet agencement est réalisé sous forme d'agencement interférométrique du type ROSAR, intégré dans ou sur un système en rotation, et positionné de telle manière que chaque région concernée de la zone à mesurer est susceptible d'être détectée, et pour obtenir une image de situation globale, plusieurs agencements interférométriques ROSAR sont agencés à des positionnements en place différents et chaînés les uns aux autres dans un fonctionnement en réseau.

2. Agencement selon la revendication 1, **caractérisé en ce que** le système en rotation est constitué par au moins une unité formée d'une antenne émettrice et de deux antennes réceptrices situées à l'extrémité d'un bras rotatif.

3. Agencement selon la revendication 1, **caractérisé en ce que** le système en rotation est constitué par un réseau d'antennes circulaire avec une commande électronique pour l'activation cyclique de régions du réseau d'antennes.

4. Agencement selon l'une ou l'autre des revendications 1 et 2, **caractérisé en ce qu'**un deuxième bras de rotor (RAg) présentant une configuration identique sur le plan radar est relié au bras de radar en rotation (RA) à titre de contrepoids.

5. Agencement selon l'une des revendications 1, 2 ou 4, **caractérisé en ce que** les antennes (A1, A2) sont protégées par des radômes (R1, R2) modelés de façon favorable sur le plan aérodynamique.

6. Agencement selon l'une des revendications précédentes, **caractérisé en ce que** les fréquences d'émission des installations radar interférométriques individuelles sont décalées les unes des autres des largeurs de bande d'émission respectives.

7. Agencement selon l'une des revendications précédentes, **caractérisé en ce que** l'agencement interférométrique pour la mesure radar est chaîné avec un agencement radar connu en soi pour la reconnaissance de cibles en déplacement.

8. Agencement selon l'une des revendications précédentes, **caractérisé en ce qu'**il est doté d'un dispositif d'évaluation pour déterminer la direction et le trajet d'objets en déplacement dans la zone surveillée.

9. Agencement selon l'une des revendications précédentes, **caractérisé en ce qu'**il est doté d'un dispositif d'évaluation pour la détermination de la taille et du type des objets détectés.

Antenne A1

RA    RAg

Antenne A2

Turm

Fig.1

3 cm

Antenne A1

Radom R1

0,66 m

Antennenarm
L = 2,25 m

Basis B = 1,5 m

RA

Verstrebung

Antenne A2

0,66 m

Radom R2

3 cm

Turm

Fig.2